# EUROPEAN PATENT APPLICATION

(11) **EP 1 504 938 A1**
(43) Date of publication of application: **09.02.2005**
(21) Application number: 04015815.6
(22) Date of filing: 06.07.2004
(51) Int. Cl.: B60J 3/02

(54) **A roof light for a sun shield**

(30) Priority: 06.08.2003 IT TO20030615
(71) Applicant: Olsa S.p.A., 10090 Rivoli (IT)
(72) Inventor: Bosco, Eugenio, 10090 Rivoli (TO) (IT)
(74) Representative: Lotti, Giorgio

(57) **Abstract**

A roof light (20) for a sun shield (1) has two opposite sides (L1, L2), is provided with a diffusing screen (25) and is mounted on the sun shield (1) with the screen (25) facing a first side (L2) of the two sides (L1, L2); a moveable door (4) is associated to the screen (25) for facing, in a selective way, the screen (25) itself also on one second side (L1) of the two sides (L1, L2).

## Description

The present invention relates to a roof light for a sun shield of a motor vehicle. Sun shields are selectively rotatable between a raised operative position, the so-called "roof position", in which they are oriented with a courtesy side thereof facing the roof of the vehicle, and a lowered operative position, the so-called "courtesy position", in which they are rotated by at least 90° with respect to the roof position.

In general, roof lights of a known type comprise a screen and a reflecting dish, and are mounted inside a sun shield with the screen set in a fixed position on the courtesy side for being activated with the sun shield set only in the courtesy position.

The purpose of the present invention is to provide a roof light for a sun shield, which can be activated with the sun shield both in the roof position and in the courtesy position.

According to the present invention, a roof light for a sun shield is provided having two opposite sides, the roof light comprising a diffusing screen, and being mounted on the sun shield with the screen facing a first side of said two sides, the roof light being characterized in that it comprises means for moving associated to at least said screen for causing the screen itself to face selectively also a second side of said two sides. The invention will now be described with reference to the annexed plate of drawings, which illustrate a non-limiting example of embodiment thereof and in which:
- Figure 1 is a cross-sectional view with parts removed for reasons of clarity of a preferred embodiment of a roof light for a sun shield according to the present invention, in which the sun shield is set in a raised operative position; and
- Figure 2 is a cross-sectional view, with parts removed for reasons of clarity, of the roof light of Figure 1, with the sun shield set in a lowered operative position.

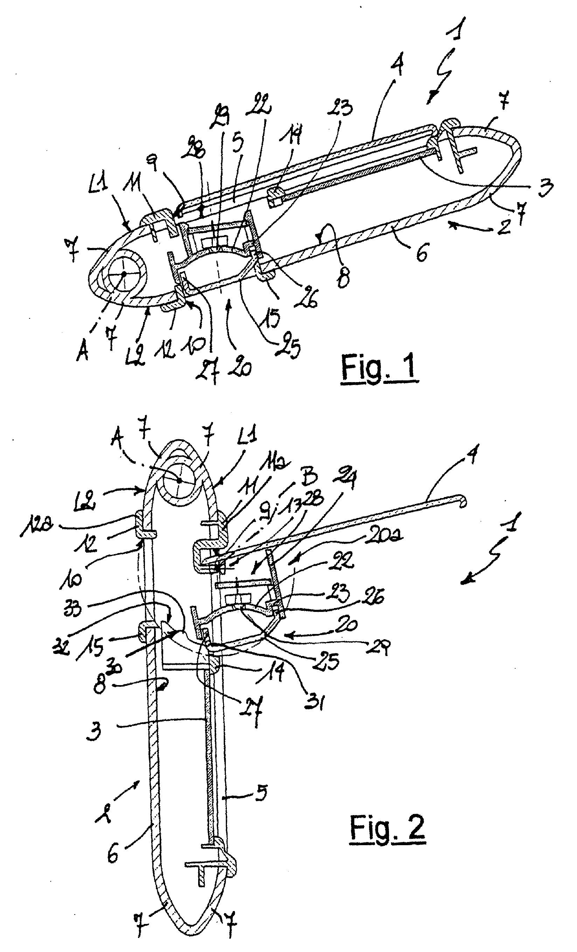

With reference to Figures 1 and 2, the reference number 20 designates, as a whole, a roof light for a sun shield 1.

The sun shield 1 is selectively rotatable about an axis A of rotation between a raised operative position, illustrated in Figure 1, in which the sun shield 1 is set with its courtesy side L1 facing upwards and a front side L2, opposite to the courtesy side L1, facing downwards, and a lowered operative position, illustrated in Figure 2, in which the sun shield 1 is rotated by an angle of at least 90° with respect to the raised position. The sun shield 1 comprises a box-shaped body 2, which is mounted so that it can turn about the axis A and comprises two walls 5 and 6, which are set facing one another, bestowing on the box-shaped body 2 itself a flattened configuration, and are tapered and joined together along their own opposite ends 7 parallel to the axis A.

The walls 5 and 6 identify, respectively, the sides L1 and L2, and have respective slits 9 and 10, of which the slit 9 is set on the side L1 and, in a direction perpendicular to the axis A, is larger than the slit 10.

The roof light 20 comprises two frames 11 and 12 set in a position corresponding to the slits 9 and 10, respectively, and an internal cross member 14, which is set inside the frame 11 parallel to the axis A and divides the slit 9 into two. The frame 11 and 12 have respective top longitudinal edges 11a and 12a, which are set substantially in a position corresponding to the axis A and are parallel to the axis A itself, whilst the frame 12 has a bottom longitudinal edge 15, which is parallel to the cross member 14 and to the axis A, and is set, with respect to the axis A, at a distance smaller than that of the cross member 14.

The roof light 20 further comprises a courtesy mirror 3 supported by the frame 11 and by the cross member 14, and a hinged cover or door 4 for covering the mirror 3 itself, mounted so that it can turn on the side L1 about an axis B of rotation parallel to the axis A, and set equidistant from the cross member 14 and from the edge 15. In particular, the edge 11a comprises a hinge 13 extending along the axis B to enable rotation of the door 4 itself between a closed operative position, in which the door 4 is set up against the mirror 3 and is set co-planar with the side L1 irrespective of the operative position of the sun shield 1, and an open operative position, in which the door 4 is raised with respect to the mirror 3 and is set at an angle greater than 90° with respect to the side L1 itself only in the case where, however, the sun shield 1 is set in its lowered operative position.

The roof light 20 further comprises: a reflecting dish 22 provided with a longitudinal slotting edge 23; an internal diaphragm 24 fixed to the dish 22 in a position corresponding to the edge 23 and to the door 3 to render the roof light 20 and the door 4 fixed to one another; and a flexible screen 25 having two longitudinal edges 26 and 27 opposite to one another and parallel to the axis B, of which the edge 26 is fitted into the edge 23, whilst the edge 27 faces the screen 25 and is free to be displaced with respect to the screen 25 itself thanks to the flexibility of the screen 25.

The roof light 20 further comprises a supporting frame 20a, which is defined in part also by the diaphragm 24 and is rigidly connected to the door 4 in order to maintain the relative disposition between the screen 25 and the door 4 itself unaltered.

The roof light 20 further comprises an electrical circuit 28, which is provided with at least one lighting element 29 facing the inside of the dish 22, and with a linear-actuation switch of a known type (not illustrated herein), which is fixed to the dish 22 and is set between the dish 22 itself and the screen 25 for being activated by the oscillation of the screen 25.

Finally, the roof light 20 comprises a shaped profile 30, which is set inside the housing 8 and is kinematically connected to the flexible screen 25 by means of a pin 31, which is fixed to the screen 25 and is free to slide, as will be explained in greater detail in what follows, along the shaped profile 30 itself.

The shaped profile 30 is delimited at the top by a circular surface 32 centred in the axis B and extending from the edge 15 to the cross member 14, and is provided with an intermediate projecting element 33, which defines a discontinuity in the surface 32 itself, and brings about, once engaged by the pin 31, the momentary approach of the screen 25 to the dish 22, with consequent pressing of the aforesaid linear-actuation switch.

According to what is illustrated in Figure 1, when the sun shield 1 is set in its raised operative position, the so-called "roof position", and the door 4 is set in its closed operative position, the roof light 20 is set with the screen 25 so that it closes the slit 10 and can be activated for lighting up the interior of the vehicle simply via pressing of the screen 25 itself. Instead, when the sun shield 1 is set in its lowered operative position, the so-called "courtesy position", and the door 4 is set in its open operative position, the roof light 20 is set with the screen 25 through the slit 10 and in a position substantially facing the mirror 3.

As anticipated above, the transition of the roof light 20 from the slit 9 to the slit 10 is obtained thanks to the rigid connection between the roof light 2 itself and the door 4, and is guided by the shaped profile 30. During this transition, the screen 25 intercepts, with its own pin 31, the projecting element 33, bringing about activation of the roof light 20 and hence switching-on of the lighting element 29.

From what is set forth above, it is evident that the adoption on board a vehicle of a sun shield 1 of the type described enables either an increase in the number of light points inside the vehicle itself, without, however, having to envisage any new supply, or else the reduction in the number of light points already existing given that the roof light 20 can function both as an internal light point and as a light for illuminating the courtesy mirror 3.

It is understood that the invention is not limited to the embodiment described and illustrated herein, which is to be considered purely as one possible example of embodiment of the sun shield for vehicles, which may instead undergo further modifications regarding the shapes and arrangements of parts, constructional details and details of assembly.

## Claims

1. A roof light (20) for a sun shield (1) having two opposite sides (L1, L2), the roof light (20) comprising a diffusing screen (25), and being mounted on the sun shield (1) with the screen (25) facing a first side (L2) of said two sides (L1, L2); the roof light (1) being **characterized in that** it comprises means for moving (4, 30) associated to at least said screen (25) for facing in a selective way the screen (25) itself also on a second side (L1) of said two sides (L1, L2).

2. The roof light according to Claim 1, **characterized in that** said means for moving (4, 30) can be activated with the sun shield (1) set in a lowered operative position and are mobile between an open operative position, in which the screen (25) is facing the first side (L2), and a closed operative position, in which the screen (25) is facing the second side (L1).

3. The roof light according to Claim 2, **characterized in that** said means for moving (4, 24) comprise a covering door (4), mounted so that it can turn with respect to said second side (L1), and a frame (20a) rigidly connected to the door (4) and set between the door (4) and the diffusing screen (25).

4. The roof light according to Claim 3, **characterized in that** it comprises a reflecting dish (22) constrained to said frame (20a) and substantially parallel to the covering door (4); the screen (25) being a flexible screen, which is partially fitted into the dish (22) and can be moved for activation or deactivation of the roof light (20) itself.

5. The roof light according to Claim 4, **characterized in that** it comprises a shaped profile (30), which is kinematically connected to the screen (25) for moving the screen (25) itself during displacement of the covering door (4) between the two operative positions.

6. The roof light according to Claim 5, **characterized in that** it comprises a slit (9) (10) for each of said sides (L1) (L2) selectively engageable by the screen (25), and a courtesy mirror (3) set on the second side (L1) in a position corresponding to one first slit (9) of said two slits (9) (10).

7. The roof light according to Claim 6, **characterized in that** said door (4) is set covering the first slit (9) and the mirror (3) in its closed operative position.

8. The roof light according to Claim 7, **characterized in that** 'it comprises, for each of said slits (9) (10), a respective frame (11) (12) provided with at least one respective longitudinal edge (11a) (12a); the longitudinal edge (11a) of the frame (11) of the second side (L1) defining a hinge (13) for rotation of said door (4) about an axis (B) of rotation.

9. The roof light according to Claim 8, **characterized in that** the frame (11) of the first side (L2) comprises an internal cross member (14) set equidistant from said axis (B) of rotation with respect to a further longitudinal edge (15) of the frame (12) of the second side (L2).

10. A roof light for a sun shield of a motor vehicle, substantially as described with reference to the annexed drawings.
